# EUROPÄISCHE PATENTSCHRIFT

(11) **EP 1 930 594 B1**
(45) Veröffentlichungstag und Bekanntmachung des Hinweises auf die Patenterteilung: **10.02.2010**
(21) Anmeldenummer: 07022976.0
(22) Anmeldetag: 27.11.2007
(51) Int. Cl.: F04B 49/00, F04B 49/06, F16H 61/46, F16H 61/42

(54) **Verfahren zur Regelung einer Hydropumpe und elektronische Steuereinheit**
Method for controlling a hydro pump and electronic control unit
Procédé de régulation d'une pompe hydraulique et unité de commande électronique

(30) Priorität: 27.11.2006 DE 102006055932
(43) Veröffentlichungstag der Anmeldung: 11.06.2008
(73) Patentinhaber: Robert Bosch GmbH, 70442 Stuttgart (DE)
(72) Erfinder: Essig, Heinz-Gerhard, 89173 Lonsee (DE); Müller, Tobias, 89415 Lauingen (DE)
(74) Vertreter: Beder, Jens

(56) Entgegenhaltungen:
- EP-A- 0 174 560
- EP-A- 0 339 202
- EP-A- 0 497 293
- EP-A- 0 736 708
- DE-A1- 3 739 387
- DE-A1- 19 619 283

## Beschreibung

Die Erfindung betrifft ein Verfahren zur Regelung einer Hydropumpe, die von einer Antriebsmaschine angetrieben wird, sowie ein entsprechendes Programm und eine elektronische Steuereinheit für einen hydrostatischen Antrieb.

Zur Steuerung von hydrostatischen Antrieben mit einer Hydropumpe, die durch einen Antriebsmotor angetrieben wird, wird häufig eine hydraulisch-wegabhängige und drehzahlabhängige Steuerung verwendet. Eine solche Steuerung ist aus dem nächstkommenden Stand der Technik DE 195 13 032 C1 bekannt. Der Antriebsmotor treibt eine Hydropumpeneinheit an, die eine verstellbare Hydropumpe sowie eine damit gekoppelte Hilfspumpe umfasst. Die Hilfspumpe ist konstant hinsichtlich ihres Fördervolumens und erzeugt damit einen Druckmittelstrom, der in festem Zusammenhang mit der Drehzahl der Antriebsmaschine steht. Um den Fahrgeschwindigkeitsbereich eines so angetriebenen Fahrzeugs zu vergrößern, wird mit zunehmender Antriebsmotordrehzahl die verstellbare Hydropumpe in Richtung größer werdenden Fördervolumens verstellt.

Die Hilfspumpe fördert ihren drehzahlabhängigen Volumenstrom in eine Förderleitung, in der eine Messdrossel angeordnet ist. Aufgrund der entstehenden Druckdifferenz stromaufwärts und stromabwärts der Drossel wird ein von der Drehzahl der Antriebsmaschine abhängiger Steuerdruck erzeugt. Mittels dieses drehzahlabhängigen Steuerdrucks wird durch eine Verstellvorrichtung die verstellbare Hydropumpe in Richtung zunehmenden Fördervolumens verstellt, wenn die Drehzahl der Antriebsmaschine steigt.

Die hydraulisch geregelte drehzahlabhängige Verstellung, wie sie aus der DE 195 13 032 C1 bekannt ist, hat den Nachteil, dass ihre Charakteristik fest eingestellt ist und zudem eine starke Abhängigkeit von der Betriebstemperatur der Anlage auftritt. Durch die geringer werdende Viskosität mit zunehmender Erwärmung des Öls verändert sich die Regelcharakteristik.

Es ist daher die Aufgabe der Erfindung, ein Verfahren zur Regelung des hydrostatischen Antriebs sowie eine entsprechende elektronische Steuereinheit und ein Computerprogramm zu schaffen, mit dem das Verhalten einer hydraulischen Steuerung nachempfunden werden kann, ohne dass eine Abhängigkeit des Regelverhaltens von dem Gegenstand der Viskosität des Druckmittels auftritt.

Die Aufgabe wird durch das erfindungsgemäße Verfahren mit den Merkmalen des Anspruchs 1, die elektronische Steuereinheit mit den Merkmalen nach Anspruch 13 sowie die Computerprogrammansprüche 18 und 20 gelöst.

Erfindungsgemäß wird bei einem hydrostatischen Antrieb mit einer verstellbaren Hydropumpe, die durch eine Antriebsmaschine angetrieben wird, und einem mit der Hydropumpe verbundenen hydraulischen Verbraucher zunächst eine Position eines Bedienelements erfasst. Dieses Bedienelement ist beispielsweise ein Fahrhebel, sofern der hydrostatische Antrieb ein Fahrantrieb ist. Aus der Position dieses Bedienelements wird eine Steuersignalzielwert ermittelt. Der Steuersignalzielwert korrespondiert bei einer als Schrägschreibenmaschine ausgeführten Hydropumpe mit einem bestimmten Schrägscheibenwinkel. Aus dem Steuersignalzielwert und einer Anpassungsfunktion wird ein Steuersignalzeitwertverlauf erzeugt. Aus dem Steuersignalzeitwertverlauf wird letztlich für jeden Zeitpunkt ein Ansteuersignal erzeugt, mit dem die Hydropumpe bzw. deren Verstellvorrichtung angesteuert wird.

Die erfindungsgemäße elektronische Steuereinheit weist hierzu eine Steuersignalerzeugungseinheit zur Erzeugung eines Steuersignalzeitwertverlaufs aus einem Steuersignalzielwert und einer Anpassungsfunktion auf. Die elektronische Steuereinheit umfasst zudem eine Regelausgangseinheit, mit der das Ansteuersignal aus dem Steuersignalzeitwertverlauf erzeugt und zur Umsetzung an die Verstellvorrichtung weitergeleitet wird.

Das erfindungsgemäße Verfahren sowie die erfindungsgemäße elektronische Steuereinheit und das entsprechende Computerprogramm und -Produkt haben den Vorteil, dass eine hydraulische Regelung des Fördervolumens einer Hydropumpe eines hydrostatischen Antriebs auf Basis von Messwerten nachempfunden wird. Dabei wird durch die elektronische Steuereinheit letztlich ein Ansteuersignal erzeugt, das auf eine Verstellvorrichtung der Hydropumpe wirkt. Das Ansteuersignal wird dabei ausgehend von einer Vorgabe eines Bedieners ermittelt, wobei die Bedienelementposition nicht unmittelbar zur Ansteuerung der Verstellvorrichtung verwendet wird. Vielmehr wird ausgehend von dem Änderungswunsch eines Bedieners zunächst eine Steuersignalzielwert ermittelt, der am Stellende erreicht werden soll. Der zeitliche Verlauf der Fördervolumenverstellung wird anschließend über die Anpassfunktion bestimmt. Die Anpassfunktion wird dabei situationsgerecht in Abhängigkeit von einem oder mehreren Systemparametern, die messtechnisch erfasst werden, festgelegt.

In den Unteransprüchen sind vorteilhafte Weiterbildungen des erfindungsgemäßen Verfahrens sowie der erfindungsgemäßen elektronischen Steuereinheit ausgeführt.

Insbesondere wird der Verlauf der Anpassungsfunktion durch ein Zeitintervall festgelegt, das einer zeitlichen Differenz zwischen einem Stellbeginn und einem Stellende entspricht. Durch das Festlegen der Anpassungsfunktion mittels des Zeitintervalls ist es möglich, beispielsweise auf starke Beschleunigungswünsche im Falle eines Fahrantriebs, die ein Bediener an einem Fahrhebel als Bedienelement vorgibt, mit einer beschleunigten Verstellung des Fördervolumens zu reagieren. Durch die Verwendung des Zeitintervalls wird somit unabhängig von der Form der Anpassungsfunktion, der beispielsweise auch individuell festlegbar ist, die maximale Zeit bis zum Erreichen des Steuersignalzielwerts vorgegeben.

Dabei wird es insbesondere bevorzugt, dass das Zeitintervall in Abhängigkeit von der Differenz des Steuersignalzielwerts und der Steuersignalistgröße festgelegt wird. Eine bestimmte Position des Bedienelements entspricht einem bestimmten Steuersignalzielwert. Gleichzeitig ist die aktuelle Einstellung der Hydropumpe dadurch berücksichtigt, dass die entsprechende Steuersignalistgröße, die mit einem Istwert der Schwenkwinkeleinstellung korrespondiert, ebenfalls in die Differenz eingeht, auf deren Basis das Zeitintervall festgelegt wird. Die Steuersignalistgröße ist derjenige Wert des Ansteuersignals, der dem momentan bei der Hydropumpe eingestellten Fördervolumen entspricht. Dabei wird es besonders bevorzugt, dass das Zeitintervall mit größer werdender Differenz des Steuersignalzielwerts und der Steuersignalistgröße kleiner wird. Dies hat zur Folge, dass bei einer starken Auslenkung des Bedienelements die Verstellung der Hydropumpe auf den neuen Zielwert schnell erfolgt.

Weiterhin ist es vorteilhaft, das Zeitintervall in Abhängigkeit von einer Ausgangsgröße der Antriebsmaschine festzulegen. Als einfachstes Beispiel kann als Ausgangsgröße die Drehzahl der Antriebsmaschine verwendet werden. Insbesondere ist es vorteilhaft, das Zeitintervall mit zunehmender Istdrehzahl der Antriebsmaschine zu verringern. Je größer folglich die Drehzahl der Antriebsmaschine ist, umso schneller wird die Hydropumpe auf ihren Zielwert verstellt. Insbesondere während einer Beschleunigung ist bei hohen Antriebsdrehzahlen auch sichergestellt, dass ausreichend Leistung zur Verfügung steht.

Weiterhin wird das Zeitintervall vorzugsweise in Abhängigkeit von einer Ausgangskenngröße des hydrostatischen Antriebs festgelegt. Die Ausgangskenngröße ist vorzugsweise eine Abtriebsdrehzahl eines Hydromotors im Falle eines hydrostatischen Fahrantriebs. Als andere Ausgangskenngrößen sind auch beispielsweise Längenänderungen denkbar, wenn der hydrostatische Antrieb eine Arbeitshydraulik betrifft.

Bei der Erzeugung des Steuersignals wird vorzugsweise zwischen einer Beschleunigung und einer Verzögerung unterschieden. Hierzu wird eine erste Anpassungsfunktion und eine zweite Anpassungsfunktion durch die elektronische Steuereinheit festgelegt. Die erste Anpassungsfunktion ergibt sich aus einem ersten Zeitintervall und die zweite Anpassungsfunktion aus einem zweiten Zeitintervall. Zur Erzeugung des Steuersignalzeitwertverlaufs wird jeweils dann die erste Anpassungsfunktion verwendet, wenn die Steuersignalzielwert größer ist als die Steuersignalistgröße. Umgekehrt wird die zweite Anpassungsfunktion zur Erzeugung des Steuersignalzeitwertverlaufs verwendet, wenn die Steuersignalzielwert kleiner ist als die Steuersignalistgröße. Dies hat den Vorteil, dass die Anpassungsfunktion, die auch als Rampe bezeichnet wird, beispielsweise für eine Beschleunigung anders gewählt werden kann als für eine Verzögerung. Insbesondere ist es möglich, die Ausgangskenngröße des hydrostatischen Antriebs für die erste Anpassungsfunktion in anderer Weise zu berücksichtigen, als bei der zweiten Anpassungsfunktion. So kann mit zunehmender Abtriebsdrehzahl als Ausgangskenngröße des hydrostatischen Antriebs das erste Zeitintervall größer gewählt werden. Auch das zweite Zeitintervall kann größer gewählt werden, wobei jedoch eine andere Anpassung für das erste und das zweite Zeitintervall durchgeführt wird.

Vorzugsweise wird zudem eine Ausgangsgröße der Antriebsmaschine erfasst. Die Ausgangsgröße kann im einfachsten Fall eine Drehzahl der Antriebsmaschine sein, mit der die Hydropumpe angetrieben wird. In Abhängigkeit von dieser Ausgangsgröße wird ein Druckgrenzwert ermittelt, der in dem hydraulischen Kreislauf, in den die Hydropumpe fördert, nicht überschritten werden darf. Aus dem Druckgrenzwert für einen bestimmten Wert der Ausgangsgröße wird dann eine Steuersignalkorrekturgröße erzeugt, mit der das Ansteuersignal korrigiert wird. Ferner umfasst die elektronische Steuereinheit eine Grenzwertermittlungseinheit zur Ermittlung des Druckgrenzwerts.

Zum Erzeugen der Steuersignalkorrekturgröße, die verwendet wird, um aus dem Steuersignalzeitwertverlauf ein Ansteuersignal zu erzeugen, mit dem letztlich die Verstellvorrichtung angesteuert wird, wird bevorzugt ein Arbeitsdruck in dem hydrostatischen Kreislauf mit einem Druckgrenzwert verglichen. Ein Begrenzen der Verstellung des Fördervolumens der Hydropumpe ist somit immer dann möglich, wenn in dem hydrostatischen Kreislauf ein Druck erreicht wird, welcher den Druckgrenzwert übersteigt. Mittels der Steuersignalkorrekturgröße wird dann das Ansteuersignal in Richtung großen Fördervolumens begrenzt, so dass die Hydropumpe in Richtung geringeren Fördervolumens verstellt wird, wodurch es zu einem Druckrückgang in dem hydraulischen Kreislauf kommt. Mittels der Steuersignalkorrekturgröße wird durch die Grenzwertermittlungseinheit zusammen mit der Regelausgangseinheit eine Begrenzung des Ausschwenkens der Hydropumpe erreicht.

Ein bevorzugtes Ausführungsbeispiel des erfindungsgemäßen Verfahrens sowie der erfindungsgemäßen elektronischen Steuereinheit sind in der Zeichnung dargestellt und werden in der nachfolgenden Beschreibung näher erläutert. Es zeigen:
- Fig. 1: eine schematische Darstellung eines hydrostatischen Fahrantriebs;
- Fig. 2: ein Ablaufdiagramm zur Durchführung des erfindungsgemäßen Verfahrens;
- Fig. 3: eine zweite Darstellung des Ablaufs zur Bestimmung des Steuersignalzeitwertverlaufs; und
- Fig. 4: ein Blockschaltbild einer erfindungsgemäßen elektronischen Steuereinheit.

Bevor auf die Durchführung des erfindungsgemäßen Verfahrens im Detail eingegangen wird, soll zunächst ein hydrostatischer Fahrantrieb mit seinen wesentlichen Komponenten zum besseren Verständnis erläutert werden. Wie es bereits vorstehend angegeben wurde, ist die Verwendung eines Fahrantriebs lediglich beispielhaft zu verstehen. Das erfindungsgemäße Verfahren kann ebenso auf andere hydrostatische Antriebe angewendet werden. Im Falle eines Fahrantriebs ist jedoch die Nachbildung von automotiven hydraulischen Steuerungen besonders vorteilhaft.

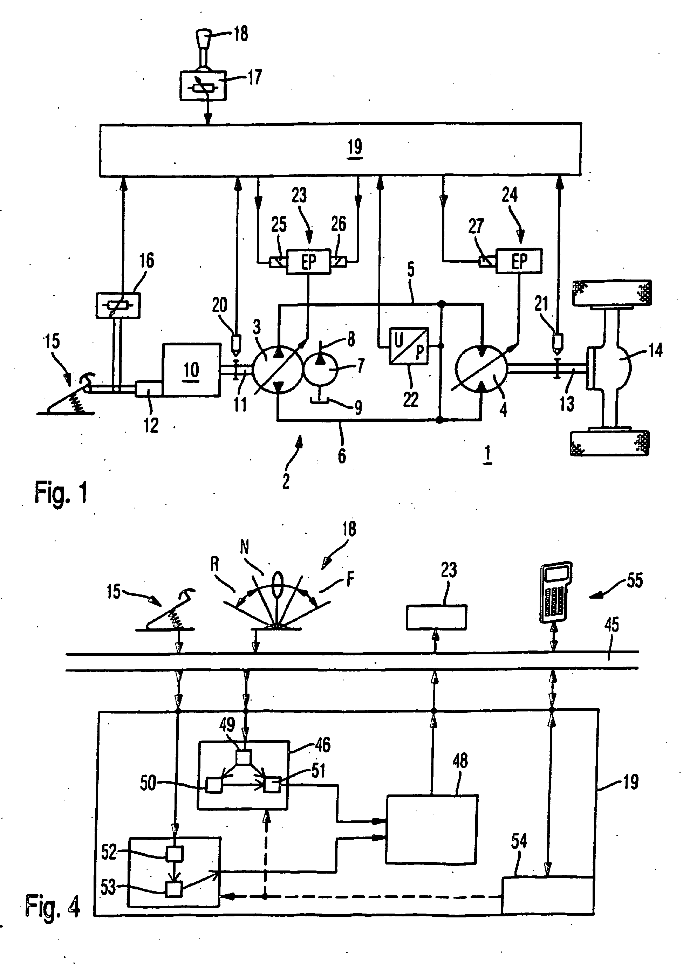

Der hydrostatische Fahrantrieb 1 der Fig. 1 umfasst ein hydrostatisches Getriebe 2. Das hydrostatische Getriebe 2 weist eine Hydropumpe 3 und einen Hydromotor 4 als hydraulischen Verbraucher auf. Die Hydropumpe 3 und der Hydromotor 4 sind in einem geschlossenen hydraulischen Kreislauf miteinander verbunden. Die Hydropumpe 3 fördert in Abhängigkeit von der eingestellten Förderrichtung in eine erste Arbeitsleitung 5 oder eine zweite Arbeitsleitung 6.

Das von der Hydropumpe 3 in die Arbeitsleitung 5 oder 6 geförderte Druckmittel wird über den Hydromotor 4 unter Erzeugung eines Abtriebdrehmoments entspannt.

Mit der Hydropumpe 3, die hinsichtlich ihrer Förderrichtung, sowie ihres Fördervolumens verstellbar ist, ist eine Speisepumpe 7 gekoppelt. Die Speisepumpe 7 ist als Konstantpumpe ausgeführt und zur Förderung in lediglich eine Richtung vorgesehen. Die Speisepumpe 7 saugt Druckmittel aus einem Tankvolumen 9 an und fördert es in eine Speisedruckleitung 8. Mittels der Speisepumpe 7 werden Druckmittelverluste, die durch unvermeidliche Leckage im hydraulischen Kreislauf entstehen, ausgeglichen.

Der Hydromotor 4 ist ebenfalls einstellbar ausgeführt. Die Hydropumpe 3 und der Hydromotor 4 sind vorzugsweise als Schrägscheibenmaschinen ausgeführt. Damit ist eine Verstellung des Fördervolumens der Hydropumpe 3 durch Einstellung des Schwenkwinkels der Hydropumpe 3 möglich. Bei dem Hydromotor 4 wird dagegen das Schluckvolumen ebenfalls durch Verschwenken der Schrägscheibe eingestellt.

Zum Antreiben der Hydropumpe 3 ist eine Antriebsmaschine 10 vorgesehen. Die Antriebsmaschine 10 ist bevorzugt eine Dieselbrennkraftmaschine, die über eine Antriebswelle 11 mit der Hydropumpe 3 gekoppelt ist. Die Hydropumpe 3 wird somit mit der Drehzahl der Antriebsmaschine 10 angetrieben.

Zur Einstellung der Drehzahl der Antriebsmaschine 10 ist im Falle einer Dieselbrennkraftmaschine ein Einspritzsystem 12 vorgesehen.

In Abhängigkeit von der eingestellten Dieseldrehzahl und dem Übersetzungsverhältnis des hydrostatischen Getriebes 2 stellt sich eine Abtriebsdrehzahl ein, mit der der Hydromotor 4 eine Abtriebswelle 13 antreibt. Der Hydromotor 4 ist über die Abtriebswelle 13 beispielsweise mit einem Achsdifferential 14 einer angetriebenen Fahrzeugachse verbunden.

Zur Einstellung der abgegebenen Leistung der Dieselbrennkraftmaschine 10 bzw. der Drehzahl der Antriebsmaschine 10 ist ein Fahrpedal 15 vorgesehen, welches auf das Einspritzsystem 12 wirkt. Mit zunehmender Betätigung des Fahrpedals 15 wird im Falle einer Dieselbrennkraftmaschine das Einspritzsystem 12 so angesteuert, dass die eingespritzte Kraftstoffmenge erhöht wird. Die Position des Fahrpedals 15 wird über einen Fahrpedalsensor 16 erfasst. Der Fahrpedalsensor 16 erzeugt aus der Position des Fahrpedals 15 ein elektrisches Positionssignal. Zusätzlich wird über einen zweiten Positionssensor 17 die Position eines Fahrhebels 18 erfasst. Die Positionssignale des ersten Positionssensors 16 und des zweiten Positionssensors 17 werden an eine elektronische Steuereinheit 19 übermittelt. In der elektronischen Steuereinheit 19 werden die ankommenden Messsignale in nachfolgend noch zu erläuternder Weise verarbeitet. Die elektronische Steuereinheit 19 erhält zusätzlich ein erstes Drehzahlsignal durch einen ersten Drehzahlsensor 20. Der erste Drehzahlsensor 20 erfasst die Drehzahl der Antriebswelle 11 und somit die Drehzahl der Antriebsmaschine 10 als Ausgangsgröße. Die Ausgangsgröße ist ein Maß für die von der Antriebsmaschine 10 abgegebene Leistung.

Mittels eines zweiten Drehzahlsensors 21 wird die Drehzahl der Abtriebswelle 13 erfasst und ebenfalls an die elektronische Steuereinheit 19 übermittelt. Die Drehzahl der Antriebswelle 13 ist eine Ausgangskenngröße des hydrostatischen Getriebes 2. Zusätzlich zu den Eingangs- und Ausgangsdrehzahlen des hydrostatischen Getriebes 2 wird der jeweilige Istdruck in den Arbeitsleitungen 5, 6 des hydrostatischen Kreislaufs erfasst. Hierzu sind Drucksensoren vorgesehen, welche zusammenfassend in der Figur 1 mit dem Bezugszeichen 22 angedeutet sind. Die Drucksensoren 22 liefern ebenfalls jeweils ein elektrisches Signal, beispielsweise eine Spannung, das von dem jeweils gemessenen Druck in der ersten Arbeitsleitung 5 oder der zweiten Arbeitsleitung 6 abhängt.

Unter Berücksichtigung sowohl der Positionssignale des ersten Positionsgebers 16 und des zweiten Positionsgebers 17 als auch der Drehzahlsignale des ersten und des zweiten Drehzahlsensors 20, 21 sowie der Drucksignale in dem hydrostatischen Kreislauf wird durch die elektronische Steuereinheit 19 ein Ansteuersignal zur Ansteuerung einer ersten Verstellvorrichtung 23 erzeugt. Die erste Verstellvorrichtung 23 ist eine elektroproportionale Verstellung. Die elektroproportionale Verstellung umfasst einen ersten Stellmagneten 25 und einen zweiten Stellmagneten 26. Die beiden Stellmagnete 25 und 26 wirken so auf einen Verstellmechanismus der Hydropumpe 3, dass proportional zu der durch den ersten Stellmagneten 25 oder den zweiten Stellmagneten 26 aufgebrachten Kraft das Fördervolumen der Hydropumpe 3 eingestellt wird.

Weiterhin wird durch die elektronische Steuereinheit 19 ein Signal zur Ansteuerung einer zweiten Verstellvorrichtung 24 erzeugt. Die zweite Verstellvorrichtung 24 ist ebenfalls eine elektroproportionale Verstellvorrichtung, die durch einen dritten Stellmagneten 27 angesteuert wird. Der dritte Stellmagnet 27 erzeugt auf die Verstellvorrichtung 24 eine Kraft, die proportional zu dem ankommenden Signal ist. Dementsprechend wird der Hydromotor 4 durch die zweite Verstellvorrichtung 24 auf ein entsprechendes Schluckvolumen verstellt.

Durch die beiden Stellmagneten 25, 26 ist die Bewegungsrichtung und die Stärke der Auslenkung der Verstellvorrichtung 23 beeinflussbar, so dass die Förderrichtung sowie das Fördervolumen der Hydropumpe 3 durch die erste Verstellvorrichtung 23 eingestellt werden.

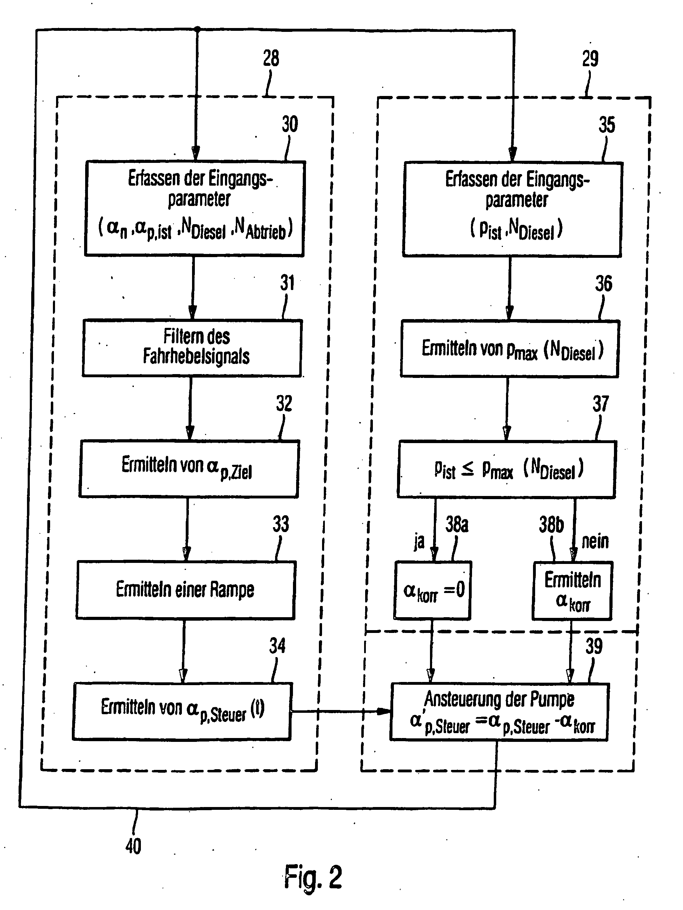

In der Fig. 2 ist vereinfacht ein Verfahrensablauf dargestellt, wie er in der elektronischen Steuereinheit 19 zur Bestimmung der Ansteuerung der ersten Verstellvorrichtung 23 der Hydropumpe 3 durchgeführt wird.

Zur Bestimmung des Ansteuersignals zur Ansteuerung der ersten Verstellvorrichtung 23 werden mehrere Verfahrensschritte eines ersten Verfahrensblocks 28 und eines zweiten Verfahrensblocks 29 durchgeführt. Ein durch den ersten Verfahrensblock 28 ermittelter Steuersignalzeitwertverlauf und eine durch den zweiten Verfahrensblock 29 Steuersignalkorrekturgröße werden anschließend so miteinander kombiniert, dass die erste Verstellvorrichtung 23 mit einem Ansteuersignal angesteuert werden kann.

In dem ersten Verfahrensblock, in dem eine hydraulischwegeabhängige Steuerung emuliert wird, werden zunächst die zur Durchführung des ersten Verfahrensblocks 28 erforderlichen Eingangsparameter in Schritt 30 erfasst. Hierzu wird zunächst die Position des Fahrhebels 18 durch den zweiten Positionsgeber 17 erfasst und der elektronischen Steuereinheit 19 als Positionssignal zugeführt. Ferner wird der tatsächlich eingestellte Schwenkwinkel α_{P,ist} der Hydropumpe 3 erfasst und der dazu korrespondierende Steuersignalistwert ermittelt. Alternativ kann auch der momentan ausgegebene Wert des Ansteuersignals als Steuersignalistwert direkt erfasst werden. Durch den ersten Drehzahlsensor 20 wird zudem die Antriebsmaschinendrehzahl N_{Diesel} und durch den zweiten Drehzahlsensor 21 die Abtriebsdrehzahl N_{Abtrieb} des hydrostatischen Getriebes 2 erfasst. Der von dem ersten Drehzahlsensor 20 ermittelte Drehzahlwert ist die Ausgangsgröße der Antriebsmaschine 10. Der von dem zweiten Drehzahlsensor 21 ermittelte Wert bildet eine Ausgangskenngröße des hydrostatischen Fahrantriebs 1.

Das Positionssignal, welches durch den zweiten Positionssensor 17 auf Basis der eingestellten Position α_{H} des Fahrhebels 18 ermittelt wurde, wird in einem nächsten Schritt 31 gefiltert. Durch die Filterung mittels eines Tiefpassfilters werden unerwünschte Signalschwankungen herausgefiltert. Damit wird erreicht, dass nur die durch einen Bediener tatsächlich beabsichtigten Fahrhebelbewegungen berücksichtigt werden.

Das so gefilterte Positionssignal entspricht nunmehr einem bestimmten Fördervolumen, auf das die Hydropumpe 3 verstellt werden soll. Durch die elektronische Steuereinheit 19 wird damit aus dem gefilterten Positionssignal ein Steuersignalzielwert ermittelt, der einem Zielschwenkwinkel α_{P,Ziel} der Hydropumpe 3 entspricht. Der Steuersignalzielwert ist derjenige Wert des Ansteuersignals, mit der die erste Verstellvorrichtung 23 angesteuert werden muss, um die Hydropumpe 3 auf den erforderlichen Zielwert der Fördermenge zum Stellende zu verstellen. Der Steuersignalzielwert wird in Schritt 32 ermittelt.

Um eine hydraulisch-wegabhängige-Regelung der Hydropumpe 3 zu emulieren, wird diese Steuersignalzielwert nicht unmittelbar umgesetzt und zur Ansteuerung der ersten Verstellvorrichtung 23 eingesetzt. Vielmehr muss das zeitliche Verhalten einer hydraulisch-wegabhängigen-Regelung der Hydropumpe 3 nachempfunden werden. Ausgehend von dem Steuersignalistwert, der mit einer bestimmten Einstellung der Hydropumpe 3 zum Zeitpunkt des Stellbeginns der Regelung korrespondiert, muss daher eine Verstellung der Hydropumpe 3 erfolgen, deren zeitlicher Verlauf einer hydrostatisch-wegabhängigen-Regelung entspricht. Dementsprechend muss das tatsächlich an die erste Verstellvorrichtung 23 übermittelte Ansteuersignal zeitlich angepasst werden. Dies wird mit Hilfe einer Anpassungsfunktion durchgeführt. Im einfachsten Beispiel ist die Anpassungsfunktion eine lineare Rampe. Ausgehend von dem Steuersignalistwert wird durch die elektronische Steuereinheit 19 ein Steuersignalzeitwertverlauf ermittelt, mit dessen Hilfe nach einem bestimmten Zeitintervall Δt der Steuersignalzielwert erreicht wird.

Die Steilheit der Rampe wird dabei durch eine Reihe von Parametern festgelegt, mit denen das Emulieren einer hydraulisch wegabhängigen Regelung möglich ist.

Zum Festlegen des Zeitintervalls Δt zwischen dem Beginn der Verstellung der Hydropumpe 3 und dem Erreichen des Steuersignalzielwerts und damit einer Zieleinstellung der Hydropumpe 3 wird zunächst eine Differenz zwischen dem Steuersignalistwert und dem Steuersignalzielwert ermittelt. Je größer diese Differenz ist, umso kürzer wird das Zeitintervall Δt zwischen Stellbeginn und Stellende gewählt. Dies hat zur Folge, dass bei einer plötzlichen sehr starken Auslenkung des Fahrhebels 18 eine starke Verstellung der Hydropumpe 3 innerhalb kurzer Zeit erfolgt. Damit wird dem Wunsch des Bedieners Rechnung getragen, eine starke Veränderung zu bewirken und die starke Öffnung eines Steuerventils bei der hydraulischwegeabhängigen Steuerung wird nachempfunden.

Als weitere Größe, die bei der Festlegung des Zeitintervalls Δt berücksichtigt wird, dient eine Ausgangsgröße der Antriebsmaschine 10. Als Ausgangsgröße kann beispielsweise die Antriebsdrehzahl N_{Diesel} verwendet werden, die durch den ersten Drehzahlsensor 20 erfasst wird. Je größer die Drehzahl der Antriebsmaschine 10 ist, umso kürzer ist das Zeitintervall Δt. Wird also beispielsweise durch eine Dieselbrennkraftmaschine eine hohe Leistung zur Verfügung gestellt, so kann auch eine entsprechend schnelle Verschwenkung des Schwenkwinkels der Hydropumpe 3 in Richtung größerer Fördervolumina erfolgen.

Bei der Festlegung des Zeitintervalls Δt zur Bestimmung der Anpassungsfunktion in Schritt 33 wird zudem berücksichtigt, ob eine Beschleunigung oder eine Verzögerung erreicht werden soll. Im Falle einer Beschleunigung, bei der die Steuersignalistgröße kleiner ist als der Steuersignalzielwert, wird ein größeres Zeitintervall Δt₁ und damit ein flacherer Verlauf der Anpassungsfunktion festgelegt. Es wird auch bei einer Verringerung des eingestellten Pumpenschwenkwinkels, dem ein im Verhältnis zur Steuersignalistgröße kleinerer Steuersignalzielwert entspricht, das Zeitintervall Δt₂ verlängert. In Abhängigkeit von der Verstellrichtung der Hydropumpe 3 wird also eine erste Anpassungsfunktion oder eine zweite Anpassungsfunktion ausgewählt. Die erste Anpassungsfunktion wird durch ein erstes Zeitintervall Δt₁ festgelegt und die zweite Anpassungsfunktion wird durch ein zweites Zeitintervall Δt₂ festgelegt. Bei einer Beschleunigung, bei der also der Steuersignalzielwert über der Steuersignalistgröße liegt, wird das erste Zeitintervall Δt und somit die erste Anpassungsfunktion ausgewählt. Insbesondere ist es möglich, Anpassungsfunktionen zu wählen, die von einer linearen Angleichung der Steuersignalistgröße an die Steuersignalzielwert abweichen. Dies kann beispielsweise durch einen Parametersatz eingestellt werden, wobei die Anpassung des zeitlichen Verlaufs, entlang deren eine Verstellung der Hydropumpe 3 bis zu dem Steuersignalzielwert verstellt wird, allein über die Festlegung des ersten bzw. des zweiten Zeitintervalls Δt₁, Δt₂ erfolgt.

Ausgehend von dem Steuersignalistwert zu Beginn des Regelprozesses und dem Steuersignalzielwert legt die Anpassungsfunktion über das so bestimmte Zeitintervall Δt₁, Δt₂ einen Steuersignalzeitwertverlauf fest. Dieser Steuersignalzeitwertverlauf ist die Grundlage zur Ansteuerung der ersten Verstellvorrichtung 23. Für jeden Zeitpunkt t bis zum Erreichen des Zielwerts wird aus dem Steuersignalzeitwertverlauf ein Wert zur Ansteuerung der Verstellvorrichtung ermittelt. Dieser Zeitwert entspricht jeweils einem momentanen Schwenkwinkel α_{P,steuer}(t) auf den die Hydropumpe 3 zu jedem Zeitpunkt t eingestellt wird.

Durch den Verfahrensblock 28 wird somit die Verstellung der Hydropumpe 3 in ihrem zeitlichen Verlauf festgelegt. Mit Hilfe des zweiten Verfahrensblocks 29 wird eine Begrenzung der Verstellung der Hydropumpe 3 in Richtung großen Fördervolumens erreicht. Hierzu werden zunächst wiederum Eingangsparameter zur Bestimmung einer Obergrenze der Verstellung der Hydropumpe 3 ermittelt (Schritt 35). Die Eingangsparameter sind ein Istdruck pᵢₛₜ in dem hydraulischen Kreislauf bestehend aus den Arbeitsleitungen 5, 6 und die Ausgangsgröße N_{Diesel} der Antriebsmaschine 10.

Ausgehend von der eingelesenen Antriebsdrehzahl N_{Diesel} wird in der elektronischen Steuereinheit 19 ein Druckgrenzwert pₘₐₓ (N_{Diesel}) ermittelt (Schritt 36). Der Druckgrenzwert pₘₐₓ (N_{Diesel}) legt den maximal in dem hydraulischen Kreislauf zulässigen Druck für die der Drehzahl N_{Diesel} entsprechende Leistung der Antriebsmaschine 10 fest. In Abhängigkeit von der Antriebsdrehzahl N_{Diesel} ist lediglich eine bestimmte Leistung verfügbar, die an das hydrostatische Getriebe 2 abgegeben werden kann. Um die Leistungsaufnahme nach oben hin zu begrenzen, wird der Druckgrenzwert pₘₐₓ (N_{Diesel}) festgelegt und mit dem Istdruck pᵢₛₜ in dem hydraulischen Kreislauf verglichen.

In Abhängigkeit von dem Ergebnis dieses Vergleichs in Schritt 37 wird ein Steuersignalkorrekturwert α_{Korr} ermittelt (Schritt 38a, 38b). Sofern der Istdruck pᵢₛₜ kleiner als der maximal zulässige Druck pₘₐₓ (N_{Diesel}) für die jeweilige Istdrehzahl N_{Diesel} der Antriebsmaschine ist, wird der Steuersignalkorrekturwert α_{Korr} auf Null gesetzt (Schritt 38), da eine Korrektur des Steuersignalzeitwerts nicht erforderlich ist. Als Ansteuersignal wird dann der Steuersignalzeitwert, der einem Wert des Steuersignalzeitwertverlaufs zu einem Zeitpunkt (t) entspricht, ausgegeben.

Übersteigt dagegen der Istdruck pᵢₛₜ in dem hydraulischen Kreislauf den maximal für diese Dieseldrehzahl N_{Diesel} zulässigen Druck, so wird ein Steuersignalkorrekturwert α_{Korr} bestimmt (Schritt 38b). Der Steuersignalzeitwert wird dann um den Steuersignalkorrekturwert α_{Korr} verringert und ein Ansteuersignal an die erste Verstellvorrichtung 23 ausgegeben (Schritt 39). Mit Hilfe des Steuersignalkorrekturwerts α_{Korr} wird die Hydropumpe 3 auf einen geringeren Schwenkwinkel verstellt und damit das Fördervolumen reduziert. Infolgedessen sinkt das Druckniveau in dem hydraulischen Kreislauf so lange, bis der Istdruck pᵢₛₜ höchstens gleich dem maximal zulässigen Druck bei der jeweiligen Istdrehzahl N_{Diesel} der Antriebsmaschine 10 ist.

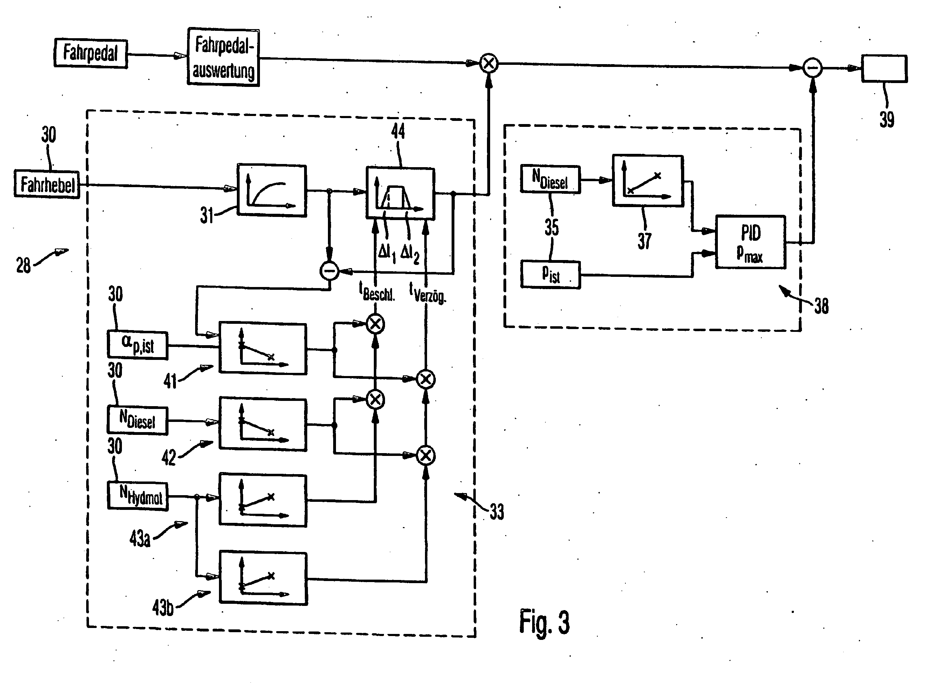

In der Fig. 3 ist noch einmal schematisch die Vorgehensweise zur Ermittlung des Ansteuersignals dargestellt. Ausgehend von der Position des Fahrhebels 18 bzw. dessen Positionsänderung wird zunächst eine Filterung des entsprechenden Positionssignals durchgeführt. Auf Basis der Parameter, die in Schritt 30 eingelesen wurden, wird dann ein Steuersignalzeitwertverlauf 44 ermittelt. Bei der Festlegung der Rampe, die im einfachsten Fall eine Gerade mit bestimmter Steigung ist, wird zur Festlegung dieser geraden Steigung ein Zeitintervall Δt₁, Δt₂ festgelegt. Dieses Zeitintervall Δt wird aus dem gefilterten Positionssignal sowie dem Steuersignalistwert ermittelt, wie es schematisch durch das Diagramm 41 dargestellt ist. Ferner wird das Zeitintervall Δt auf Basis der Antriebsdrehzahl N_{Diesel} der Antriebsmaschine 10 festgelegt. Das Diagramm 42 zeigt die Abnahme des Zeitintervalls Δt mit zunehmender Antriebsdrehzahl N_{Diesel}.

In Abhängigkeit von der Bewegungsrichtung des Fahrhebels 18 zeigen die beiden Diagramme 43a und 43b, dass ein erstes Zeitintervall Δt₁ oder ein zweites Zeitintervall Δt₂ festgelegt wird, je nachdem, ob der Steuersignalzielwert größer oder kleiner als die Steuersignalistgröße ist(Diagrammme 43a, 43b). Nach Festlegung des Zeitintervalls Δt wird die tatsächliche Rampe ermittelt und unter Berücksichtigung der Rampe als Anpassungsfunktion auf Basis des gefilterten Positionssignals ein Steuersignalzeitwertverlauf mit jeweils einem Steuersignalzeitwert für jeden Zeitpunkt vom Stellbeginn bis zum Stellende der Verstellung festgelegt.

Zudem wird ein Druckgrenzwert pₘₐₓ (N_{Diesel}) festgelegt und der aktuelle Druckistwert pᵢₛₜ in dem hydraulischen Kreislauf festgelegt. Der Druckgrenzwert pₘₐₓ (N_{Diesel}) wird gemäß dem Diagramm 37 in Abhängigkeit von der Antriebsdrehzahl N_{Diesel} festgelegt (Diagramm 37). Nach dem Vergleich des Istdrucks pᵢₛₜ mit dem Maximaldruck pₘₐₓ (N_{Diesel}) wird hieraus die Steuersignalkorrekturgröße α_{Korr} ermittelt und damit der Steuersignalzeitwert zu dem letztlich auszugebenden Ansteuersignal korrigiert. Dieses Ausgangssignal wird dann an die erste Verstellvorrichtung 23 übermittelt.

In der Fig. 4 ist ein Blockschaltbild eines entsprechenden elektronischen Steuergeräts 19 dargestellt. Das elektronische Steuergerät 19 ist mit einem Bussystem 45 verbunden. Über das Bussystem 45 erfolgt ein Datenaustausch der elektronischen Steuereinheit 19 mit den Sensoren, beispielsweise den Drehzahlsensoren 20, 21 oder den Positionssensoren 16, 17.

Wie es für den schematisch dargestellten Fahrhebel 18 gezeigt ist, wird der gesamte Verstellbereich des Fahrhebels 18 in drei Teilbereiche R, N und F aufgeteilt. Neben den beiden Fahrbereichen für Vorwärtsfahrt F und Rückwärtsfahrt R gibt es einen Neutralbereich N in dem eine Regelung der Hydropumpe 3 nicht erfolgt. Damit wird der übliche Leerweg, wie er auch bei hydraulischwegabhängigen Regelungen vorhanden ist, nachempfunden. Eine Umgewöhnung eines Bedieners, der bislang hydraulisch-wegabhängige Regelungen gewöhnt war, ist damit nicht erforderlich.

Die elektronische Steuereinheit 19 umfasst eine Steuersignalerzeugungseinheit 46 zum Erzeugen eines Steuersignalzeitwertverlaufs. In der Steuersignalerzeugungseinheit 46 ist ein Filterabschnitt 49 zur Tiefpassfilterung des ankommenden Positionssignals des Fahrhebels 18 angeordnet. Der Filterabschnitt 49 gibt ein gefiltertes Positionssignal an einen Anpassungsfunktionsabschnitt 50 weiter. In dem Anpassungsfunktionsabschnitt 50 wird das Zeitintervall Δt₁ oder Δt₂ festgelegt und damit die Anpassungsfunktion bestimmt. Auf Basis der in dem Anpassungsfunktionsabschnitt 50 festgelegten Anpassungsfunktion sowie dem gefilterten Positionssignal durch den Filterabschnitt 49 wird in einem Steuersignalerzeugungsabschnitt 51 ein Steuersignalzeitwertverlauf erzeugt. Der Steuersignalzeitwertverlauf wird von der Steuersignalerzeugungseinheit 46 ausgegeben.

Zudem wird durch eine Grenzwertermittlungseinheit 47 ein Steuersignalkorrekturwert α_{Korr} ermittelt. Hierzu wird ausgehend von der tatsächlichen Antriebsmaschinendrehzahl N_{Diesel} zunächst ein Druckgrenzwert pₘₐₓ (N_{Diesel}) in einem ersten Abschnitt 42 ermittelt. Ausgehend von dem Druckgrenzwert pₘₐₓ (N_{Diesel}) wird ein Vergleich mit dem Istdruck pᵢₛₜ in dem hydraulischen Kreislauf in einem zweiten Abschnitt 53 durchgeführt und der Steuersignalkorrekturwert α_{Korr} ermittelt. Dieser Steuersignalkorrekturwert α_{Korr} wird an eine Regelausgangseinheit 48 weitergeleitet. Die Regelausgangseinheit 48 liest den Steuersignalzeitwertverlauf von der Steuersignalerzeugungseinheit 46 und den Steuersignalkorrekturwert α_{Korr} von der Grenzwertermittlungseinheit 47 ein. Durch Differenzbildung wird aus jeweils einem Steuersignalzeitwert zu einem bestimmten Zeitpunkt des Steuersignalzeitwertverlaufs und dem Steuersignalkorrekturwert α_{Korr} ein Ansteuersignal ermittelt. Dieses Ansteuersignal wird von der elektronischen Steuereinheit 19 ausgegeben und beispielsweise über das Bussystem 45 an die erste Verstelleinrichtung 43 übermittelt.

Der Vollständigkeit halber ist in der Fig. 4 auch ein Servicesystem 55 dargestellt. Mit dem Servicesystem 55 kann ebenfalls über das Bussystem 45 ein Austausch eines Parametersatzes der elektronischen Steuereinheit 19 vorgenommen oder aber ein Fehlerspeicher der elektronischen Steuereinheit 19 ausgelesen werden. Der Fehlerspeicher ist Bestandteil eines Speicherelements 54, in dem auch Parametersätze gespeichert sind. Mit Hilfe der Parametersätze lassen sich beispielsweise progressive oder lineare Anpassungsfunktionen erzeugen. Das Speicherelement 54 steht daher in Verbindung mit der Steuersignalerzeugungseinheit 46 und der Grenzwertermittlungseinheit 47. Insbesondere können unterschiedliche Kennfelder der Antriebsmaschine 10 berücksichtigt werden, so dass durch Anpassung der Parameter der Grenzwertermittlungseinheit 47 unterschiedliche Druckgrenzwerte pₘₐₓ (N_{Diesel}) für dieselbe Antriebsmaschinendrehzahl N_{Diesel} in Abhängigkeit von dem verwendeten Antriebsmaschinentyp vorgegeben werden.

Die Erfindung ist nicht auf das dargestellte Ausführungsbeispiel beschränkt. Insbesondere ist es auch möglich, eine Anpassung des Zeitintervalls Δt unter Berücksichtigung lediglich eines Teils der Eingangsgrößen vorzunehmen.

## Patentansprüche

1. Verfahren zur Regelung einer Hydropumpe (3) eines hydrostatischen Antriebs (1), wobei die Hydropumpe (3) verstellbar ist und durch eine Antriebsmaschine (10) angetrieben wird, mit einem mit der Hydropumpe (3) verbundenen hydraulischen Verbraucher (4), mit folgenden Verfahrensschritten:
- Erfassen einer Position eines Bedienelements (18, 30),
- Ermitteln eines ersten Steuersignalzielwerts aus der Position des Bedienelements (18),
- Erzeugen eines Steuersignalzeitwertverlaufs aus der Steuersignalzielwert und einer Anpassungsfunktion (33, 34) und
- Erzeugen eines Ansteuersignals aus dem Steuersignalzeitwertverlauf (39).

2. Verfahren nach Anspruch 1,
**dadurch gekennzeichnet,**
**dass** der Verlauf der Anpassungsfunktion durch ein Zeitintervall (Δt₁, Δt₂) festgelegt wird, das einer zeitlichen Differenz zwischen einem Stellbeginn und einem Stellende entspricht.

3. Verfahren nach Anspruch 2,
**dadurch gekennzeichnet,**
**dass** das Zeitintervall (Δt₁, Δt₂) in Abhängigkeit von einer Differenz zwischen dem Steuersignalzielwert und einer Steuersignalistgröße festgelegt wird.

4. Verfahren nach Anspruch 3,
**dadurch gekennzeichnet,**
**dass** das Zeitintervall (Δt₁, Δt₂) mit größer werdender Differenz kleiner wird.

5. Verfahren nach einem der Ansprüche 2 bis 4,
**dadurch gekennzeichnet,**
**dass** das Zeitintervall (Δt₁, Δt₂) in Abhängigkeit von der Ausgangsgröße (N_{Diesel}) der Antriebsmaschine (10) festgelegt wird.

6. Verfahren nach Anspruch 5,
**dadurch gekennzeichnet,**
**dass** die Ausgangsgröße der Antriebmaschine (10) eine Ist-Drehzahl (N_{Diesel}) der Antriebsmaschine (10) ist und das Zeitintervall (Δt₁, Δt₂) mit zunehmender IstDrehzahl (N_{Diesel}) kleiner wird.

7. Verfahren nach einem der Ansprüche 2 bis 6,
**dadurch gekennzeichnet,**
**dass** das Zeitintervall (Δt₁, Δt₂) in Abhängigkeit von einer Ausgangskenngröße des hydrostatischen Antriebs (1) festgelegt wird.

8. Verfahren nach einem der Ansprüche 2 bis 7,
**dadurch gekennzeichnet,**
**dass** zum Ermitteln des Steuersignalzeitwertverlaufs eine erste Anpassungsfunktion mit einem ersten Zeitintervall (Δt₁) festgelegt wird, wenn der Steuersignalzielwert größer ist als die Steuersignalistgröße und dass zum Ermitteln des Steuersignalzeitwertverlaufs eine zweite Anpassungsfunktion mit einem zweiten Zeitintervall (Δt₂) festgelegt wird, wenn der Steuersignalzielwert kleiner ist als die Steuersignalistgröße.

9. Verfahren nach Anspruch 8,
**dadurch gekennzeichnet,**
**dass** die Ausgangskenngröße des hydrostatischen Antriebs (1) eine Abtriebsdrehzahl ist und mit zunehmender Abtriebsdrehzahl das erste Zeitintervall (Δt₁) größer und das zweite Zeitintervall (Δt₂) größer wird.

10. Verfahren nach einem der Ansprüche 1 bis 9,
**dadurch gekennzeichnet,**
**dass** zum Erzeugen des Ansteuersignals ein Druckgrenzwert (pₘₐₓ (N_{Diesel})) ermittelt wird und eine Steuersignalkorrekturgröße (α_{Korr}) unter Berücksichtigung einer Ausgangsgröße (N_{Diesel}) der Antriebsmaschine (10) und des Druckgrenzwerts (pₘₐₓ (N_{Diesel})) ermittelt wird.

11. Verfahren nach Anspruch 10,
**dadurch gekennzeichnet,**
**dass** zum Erzeugen der Steuersignalkorrekturgröße (α_{Korr}) ein Istdruck (pᵢₛₜ) in den Arbeitsleitungen (5, 6) mit dem Druckgrenzwert (pₘₐₓ (N_{Diesel})) verglichen wird.

12. Verfahren nach Anspruch 10 bis 11,
**dadurch gekennzeichnet,**
**dass** die Ausgangsgröße der Antriebsmaschine (10) eine Antriebsdrehzahl (N_{Diesel}) der Hydropumpe (3) ist.

13. Elektronische Steuereinheit für einen hydrostatischen Antrieb (1) mit einer durch eine Antriebsmaschine (10) angetriebene Hydropumpe (3) mit einer Steuersignalerzeugungseinheit (46) zur Erzeugung eines Steuersignalzeitwertverlaufs aus einem Steuersignalzielwert und einer Anpassungsfunktion und mit einer Regelausgangseinheit (48) zur Erzeugung eines Ansteuersignals,
**dadurch gekennzeichnet,**
**dass** die Steuersignalerzeugungseinheit (46) so eingerichtet ist,
- **dass** durch sie ein einer erfassten Position eines Bedienelements (18, 30) entsprechendes Positionssignal erfasst wird,
- ein erster Steuersignalzielwert aus der Position des Bedienelements (18) ermittelt wird,
- ein Steuersignalzeitwertverlauf aus der Steuersignalzielwert und einer Anpassungsfunktion (33, 34) erzeugt wird und die Regelausgangseinheit (48) so eingerichtet ist,
- **dass** durch sie ein Ansteuersignal aus dem Steuersignalzeitwertverlauf (39) erzeugt wird.

14. Elektronische Steuereinheit nach Anspruch 13,
**dadurch gekennzeichnet,**
**dass** die Steuersignalerzeugungseinheit (46) einen Filterabschnitt (49) zur Filterung eines Positionssignals eines Bedienelements (18) aufweist.

15. Elektronische Steuereinheit nach Anspruch 13 oder 14,
**dadurch gekenntzeichnet,**
**dass** die Steuersignalerzeugungseinheit (46) einen Anpassungsfunktionsabschnitt (50) aufweist, durch den eine Anpassungsfunktion auf Basis eines Zeitintervalls (Δt₁, Δt₂) erzeugbar ist.

16. Elektronische Steuereinheit nach Anspruch 15,
**dadurch gekenntzeichnet,**
**dass** durch den Anpassungsfunktionsabschnitt (50) das Zeitintervall (Δt₁, Δt₂) in Abhängigkeit von einer Differenz zwischen einem Steuersignalzielwert und einer Steuersignalistgröße und/oder in Abhängigkeit von einer Ausgangsgröße der Antriebsmaschine (10) und/oder in Abhängigkeit von einer Ausgangskenngröße des hydrostatischen Antriebs (1) festlegbar ist.

17. Elektronische Steuereinheit nach einem der Ansprüche 15 oder 16,
**dadurch gekenntzeichnet,**
**dass** durch den Anpassungsfunktionsabschnitt (50) ein erstes Zeitintervall (Δt₁) festlegbar ist, wenn der Steuersignalzielwert die Steuersignalistgröße überschreitet, oder ein zweites Zeitintervall (Δt₂) festlegbar ist, wenn der Steuersignalzielwert die Steuersignalistgröße unterschreitet.

18. Elektronische Steuereinheit nach einem der Ansprüche 13 bis 17,
**dadurch gekennzeichnet,**
**dass** die elektronische Steuereinheit eine Grenzwertermittlungseinheit (47) zur Ermittlung eines Druckgrenzwerts (pₘₐₓ (N_{Diesel})) für den hydrostatischen Antrieb (1) und zur Erzeugung eines Steuersignalkorrekturwerts (α_{Korr}) aufweist.

19. Digitales Speichermedium mit elektronisch auslesbaren Steuersignalen, die so mit einer elektronischen Steuereinheit nach einem der Ansprüche 13 bis 18 zusammenwirken können, dass das Verfahren nach einem der Ansprüche 1 bis 12 ausgeführt wird.

20. Computerprogramm mit Programmcode-Mitteln, um alle Schritte gemäß einem der Ansprüche 1 bis 12 durchführen zu können, wenn das Programm auf einer elektronischen Steuereinheit nach einem der Ansprüche 13 bis 18 ausgeführt wird.

## Claims

1. A method for controlling a hydro-pump (3) of a hydrostatic drive (1), wherein the hydro-pump (3) is adjustable and is driven by a drive motor (10), with a hydraulic consumer (4) connected to the hydro-pump (3), comprising the following method steps:
- registration of a position of an operating element (18, 30),
- determination of a first control-signal set value from the position of the operating element (18),
- generation of a control-signal time-value characteristic from the control-signal set value and a matching function (33, 34) and
- generation of a control signal from the control-signal time-value characteristic (39).

2. The method according to claim 1,
**characterised in that**
the characteristic of the matching function is specified by the time interval (Δt₁, Δt₂), which corresponds to a time difference between a start of adjustment and an end of adjustment.

3. The method according to claim 2,
**characterised in that**
the time interval (Δt₁, Δt₂) is specified dependent upon a difference between the control-signal set value and a control-signal actual value.

4. The method according to claim 3,
**characterised in that**
the time interval (Δt₁, Δt₂) becomes smaller with an increasing difference.

5. The method according to any one of claims 2 to 4,
**characterised in that**
the time interval (Δt₁, Δt₂) is specified dependent upon the output value (N_{Diesel}) of the drive motor (10).

6. The method according to claim 5,
**characterised in that**
the output value of the drive motor (10) is an actual speed (N_{Diesel}) of the drive motor (10), and the time interval (Δt₁, Δt₂) becomes smaller with an increasing actual speed (N_{Diesel}).

7. The method according to any one of claims 2 to 6,
**characterised in that**
the time interval (Δt₁, Δt₂) is specified dependent upon an output parameter of the hydrostatic drive (1).

8. The method according to any one of claims 2 to 7,
**characterised in that,**
in order to determine the control-signal time-value characteristic, a first matching function with a first time interval (Δt₁) is specified, if the control-signal set value is larger than the control-signal actual value, and that, in order to determine the control-signal time-value characteristic, a second matching function with a second time interval (Δt₂) is specified, if the control-signal set value is smaller than the control-signal actual value.

9. The method according to claim 8,
**characterised in that**
the output parameter of the hydrostatic drive (1) is an output speed and, with an increasing output speed, the first time interval (Δt₁) becomes larger, and the second time interval (Δt₂) becomes larger.

10. The method according to any one of claims 1 to 9,
**characterised in that,**
in order to generate the control signal, a pressure-limit value (pₘₐₓ (N_{Diesel})) is determined, and a control-signal correction value (α_{corr}) is determined taking into consideration an output value (N_{Diesel}) of the drive motor (10) and the pressure-limit value (pₘₐₓ (N_{Diesel})).

11. The method according to claim 10,
**characterised in that,**
in order to generate the control-signal correction value (α_{corr}), an actual pressure (p_{actual}) in the operating lines (5, 6) is compared with the pressure-limit value (pₘₐₓ (N_{Diesel})).

12. The method according to claim 10 to 11,
**characterised in that**
the output value of the drive motor (10) is a drive speed (N_{Diesel}) of the hydro-pump (3).

13. An electronic control unit for a hydrostatic drive (1) with a hydro-pump (3) driven by a drive motor (10) with a control-signal generating unit (46) for the generation of a control-signal time-value characteristic from a control-signal set value and a matching function and with a control-output unit (48) for the generation of a control signal,
**characterised in that**
the control-signal generating unit (46) is set up in such a manner that
- a position signal corresponding to a registered position of an operating element (18, 30) is registered by it,
- a first control-signal set value is determined from the position of the operating element (18),
- a control-signal time-value characteristic is generated from the control-signal set value and a matching function (33, 34), and
the control-output unit (48) is set up in such a manner that
- a control signal is generated by it from the control-signal time-value characteristic (39).

14. The electronic control unit according to claim 13,
**characterised in that**
the control-signal generating unit (46) provides a filter sub-unit (49) for filtering a position signal of an operating element (18).

15. The electronic control unit according to claim 13 or 14,
**characterised in that**
the control-signal generating unit (46) provides a matching-function sub-unit (50), through which a matching function can be generated on the basis of a time interval (Δt₁, Δt₂).

16. The electronic control unit according to claim 15,
**characterised in that,**
through the matching-function sub-unit (50), the time interval (Δt₁, Δt₂) can be specified dependent upon a difference between a control-signal set value and a control-signal actual value and/or dependent upon an output value of the drive motor (10) and/or dependent upon an output parameter of the hydrostatic drive (1).

17. The electronic control unit according to any one of claims 15 or 16,
**characterised in that,**
through the matching-function sub-unit (50), a first time interval (Δt₁) can be specified, if the control-signal set value exceeds the control-signal actual value, or a second time interval (Δt₂) can be specified, if the control-signal set value falls below the control-signal actual value.

18. The electronic control unit according to any one of claims 13 to 17,
**characterised in that**
the electronic control unit provides a limit-determining unit (47) for the determination of a pressure-limit value (pₘₐₓ (N_{Diesel})) for the hydrostatic drive (1) and for the generation of a control-signal correction value (α_{corr}).

19. A digital storage medium with electronically-readable control signals, which can cooperate in such a manner with an electronic control unit according to any one of claims 13 to 18, that the method according to any one of claims 1 to 12 is executed.

20. A computer program with program code means, in order to implement all of the steps according to any one of claims 1 to 12, when the program is executed on an electronic control unit according to any one of claims 13 to 18.

## Revendications

1. Procédé de régulation d'une pompe hydraulique (3) d'une transmission hydrostatique (1), ladite pompe hydraulique (3) pouvant être régulée et étant actionnée par un moteur d'entraînement (10), avec un consommateur (4) hydraulique relié à la pompe hydraulique (3), ledit procédé comportant les étapes suivantes:
- détecter une position d'un élément de commande (18, 30),
- déterminer une première valeur cible d'un signal de commande à partir de la position de l'élément de commande (18),
- générer une courbe d'une valeur actuelle du signal de commande, à partir de la valeur cible du signal de commande et d'une fonction d'adaptation (33, 34), et
- générer un signal d'activation à partir de la courbe de la valeur actuelle du signal de commande (39).

2. Procédé selon la revendication 1, **caractérisé en ce que** la courbe de la fonction d'adaptation est définie par un intervalle de temps (Δt₁, Δt₂), qui correspond à une différence de temps entre un début de réglage et une fin de réglage.

3. Procédé selon la revendication 2, **caractérisé en ce que** l'intervalle de temps (Δt₁, Δt₂) est défini en fonction d'une différence entre la valeur cible du signal de commande et une grandeur réelle du signal de commande.

4. Procédé selon la revendication 3, **caractérisé en ce que** l'intervalle de temps (Δt₁, Δt₂) devient plus petit lorsque ladite différence augmente.

5. Procédé selon l'une quelconque des revendications 2 à 4, **caractérisé en ce que** l'intervalle de temps (Δt₁, Δt₂) est défini en fonction de la grandeur de sortie (N_{diesel}) du moteur d'entraînement (10).

6. Procédé selon la revendication 5, **caractérisé en ce que** la grandeur de sortie du moteur d'entraînement (10) est une vitesse de rotation réelle (N_{diesel}) du moteur d'entraînement (10) et l'intervalle de temps (Δt₁, Δt₂) devient plus petit lorsque la vitesse de rotation réelle (N_{diesel}) augmente.

7. Procédé selon l'une quelconque des revendications 2 à 6, **caractérisé en ce que** l'intervalle de temps (Δt₁, Δt₂) est défini en fonction d'un grandeur caractéristique de sortie de la transmission hydrostatique (1).

8. Procédé selon l'une quelconque des revendications 2 à 7, **caractérisé en ce que** pour calculer la courbe de la valeur actuelle du signal de commande, il est défini une première fonction d'adaptation avec un premier intervalle de temps (Δt₁) lorsque la valeur cible du signal de commande est supérieure à la grandeur réelle du signal de commande, et **en ce que** pour calculer la courbe de la valeur actuelle du signal de commande, il est défini une deuxième fonction d'adaptation avec un deuxième intervalle de temps (Δt₂) lorsque la valeur cible du signal de commande est inférieure à la grandeur réelle du signal de commande.

9. Procédé selon la revendication 8, **caractérisé en ce que** la grandeur caractéristique de sortie de la transmission hydrostatique (1) est une vitesse de rotation de l'arbre de sortie et lorsque la vitesse de rotation de l'arbre de sortie augmente le premier intervalle de temps (Δt₁) devient plus grand et le deuxième intervalle de temps (Δt₂) devient plus grand.

10. Procédé selon l'une quelconque des revendications 1 à 9, **caractérisé en ce que** pour générer le signal d'activation, une valeur limite de pression (pₘₐₓ (N_{diesel})) est déterminée et une grandeur de correction (α_{corr}) du signal de commande est déterminée en tenant compte d'une grandeur de sortie (N_{diesel}) du moteur d'entraînement (10) et de la valeur limite de pression (pₘₐₓ (N_{diesel})).

11. Procédé selon la revendication 10, **caractérisé en ce que** pour générer la grandeur de correction (α_{corr}) du signal de commande, une pression réelle (pᵢₛₜ) dans les conduites de travail (5, 6) est comparée à une valeur limite de pression (pₘₐₓ (N_{diesel})).

12. Procédé selon l'une quelconque des revendications 10 à 11, **caractérisé en ce que** la grandeur de sortie du moteur d'entraînement (10) est une vitesse de rotation d'entraînement (N_{diesel}) de la pompe hydraulique (3).

13. Unité de commande électronique pour une transmission hydrostatique (1) avec une pompe hydraulique (3) actionnée par un moteur d'entraînement (10), comportant une unité générant un signal de commande (46), destinée à générer une courbe de la valeur actuelle du signal de commande à partir d'une valeur cible du signal de commande et d'une fonction d'adaptation, et comportant une unité avec sortie de régulation (48) destinée à générer un signal d'activation,
**caractérisée en ce que**
l'unité générant un signal de commande (46) est conçue de telle sorte
- qu'un signal de position, correspondant à une position détectée d'un élément de commande (18, 30), est détecté par ladite unité,
- une première valeur cible du signal de commande est calculée à partir de la position de l'élément de commande (18),
- une courbe de la valeur actuelle du signal de commande est générée à partir de la valeur cible du signal de commande et d'une fonction d'adaptation (33, 34), et
l'unité avec sortie de régulation (48) est conçue de telle sorte
- qu'un signal d'activation (39) est généré par ladite unité à partir de la courbe de la valeur actuelle du signal de commande.

14. Unité de commande électronique selon la revendication 13, **caractérisée en ce que** l'unité générant un signal de commande (46) comporte une partie de filtrage (49) destinée à filtrer un signal de position d'un élément de commande (18).

15. Unité de commande électronique selon la revendication 13 ou 14, **caractérisée en ce que** l'unité générant un signal de commande (46) comporte une partie pour fonction d'adaptation (50), par laquelle une fonction d'adaptation peut être générée sur la base d'un intervalle de temps (Δt₁, Δt₂).

16. Unité de commande électronique selon la revendication 15, **caractérisée en ce que** la partie pour fonction d'adaptation (50) permet de définir l'intervalle de temps (Δt₁, Δt₂) en fonction d'une différence entre une valeur cible du signal de commande et une grandeur réelle du signal de commande et/ou en fonction d'une grandeur de sortie du moteur d'entraînement (10) et/ou en fonction d'une grandeur caractéristique de sortie de la transmission hydrostatique (1).

17. Unité de commande électronique selon la revendication 15 ou 16, **caractérisée en ce que** la partie pour fonction d'adaptation (50) permet de définir un premier intervalle de temps (Δt₁) lorsque la valeur cible du signal de commande est supérieure à la grandeur réelle du signal de commande, ou permet de définir un deuxième intervalle de temps (Δt₂) lorsque la valeur cible du signal de commande est inférieure à la grandeur réelle du signal de commande.

18. Unité de commande électronique selon l'une quelconque des revendications 13 à 17, **caractérisée en ce que** ladite unité de commande électronique comporte une unité de calcul de la valeur limite (47), destinée à calculer une valeur limite de pression (pₘₐₓ (N_{diesel})) pour la transmission hydrostatique (1) et destinée à générer une valeur de correction (α_{corr}) du signal de commande.

19. Support de mémoire numérique avec des signaux de commande qui peuvent être lus par voie électronique et qui peuvent coopérer avec une unité de commande électronique selon l'une quelconque des revendications 13 à 18 de manière à exécuter le procédé selon l'une quelconque des revendications 1 à 12.

20. Programme informatique avec des moyens de codage du programme, pour pouvoir exécuter toutes les étapes selon l'une quelconque des revendications 1 à 12, lorsque le programme est exécuté sur une unité de commande électronique selon l'une quelconque des revendications 13 à 18.
